# EUROPÄISCHE PATENTSCHRIFT

(11) **EP 0 567 805 B1**
(45) Veröffentlichungstag und Bekanntmachung des Hinweises auf die Patenterteilung: **29.11.1995**
(21) Anmeldenummer: 93105573.5
(22) Anmeldetag: 03.04.1993
(51) Int. Cl.: F04B 1/24, F16H 23/00

(54) **Lagerung für zwei zueinander abgewinkelte Bauteile innerhalb eines Gehäuses**
Mounting of two mutually inclined components within a housing
Palier pour deux éléments de construction incliné dans une boîte

(30) Priorität: 30.04.1992 DE 4214243
(43) Veröffentlichungstag der Anmeldung: 03.11.1993
(73) Patentinhaber: VOAC HYDRAULICS AB, 461 29 Trollhättan (SE)
(72) Erfinder: Schnapp, Wolfgang, Dipl.-Ing., W-8551 Röttenbach (DE); Becker, Klaus, Dipl.-Ing., W-8522 Herzogenaurach (DE); Meier, Peter, W-8521 Weisendorf (DE)
(74) Vertreter: Delmar, John-Ake

(56) Entgegenhaltungen:
- WO-A-88/03228
- DE-A- 1 453 516
- DE-A- 2 001 484
- DE-A- 2 412 619
- DE-B- 1 041 362
- DE-B- 1 095 122
- US-A- 3 107 632
- US-A- 3 793 924

## Beschreibung

Die Erfindung betrifft eine Lagerung für zwei zueinander abgewinktelte Bauteile, die in einem Gehäuse eingebracht sind, insbesondere nach dem Oberbegriff des Anspruchs 1.

Aus Axialkolbenmotoren oder Axialkolbenpumpen in einer Schrägachsenbauart sind diese Lagerungen unter anderem bekannt. Weiter findet eine solche Lagerung Anwendung in Aggregaten oder spezielle Maschineneinheiten, die mit zueinander schräg angeordneten und Drehmomente übertragenden Wellen versehen sind. Eine bekannte Schrägachseinheit ist versehen mit einem Gehäuse, das einen horizontalen und einen dazu abgewinkelten Abschnitt aufweist, die einstückig miteinander verbunden sind. Im horizontalen Abschnitt ist die Antriebswelle wälzgelagert eingebracht, die in Richtung des abgewinkelten Abschnittes endseitig eine Hubscheibe aufweist. Zum Antrieb der im Verdichterteil, d. h. im abgewinkelten Bereich des Gehäuses drehbar gelagerten Zylindertrommel dienen Kugelstangen, die symmetrisch auf der Hubscheibe angeordnet eine Antriebsverbindung herstellen. Die wälzgelagerte Antriebswelle umfaßt mehrere Kugellager, wobei zwei der Hubscheibe nebengeordnet sind, über die Axial- und Radialkräfte aufgenommen werden, zur Einleitung in das Pumpengehäuse. Den beiden unmittelbar nebeneinander angeordneten Kugel lagern folgt dann in der von der Hubscheibe abgewandten Seite ein im Bereich der Lageraußenringe angeordneter Zwischenring, dem sich ein weiteres Kugellager anschließt, dem folgt ein Abstandsring, der bis zu einem in die Gehäusebohrung eingesetzten Abdichtung reicht, welche axial fixiert ist. Der bekannte Aufbau weist eine Vielzahl von aneinander gereihten Bauteilen auf zur Lagerung der Antriebswelle mit dem Nachteil einer Toleranzaddition.

Es sind weiter Axialkolbenpumpen in Schrägachsenbauart bekannt, bei der die Antriebswelle und die Zylindertrommel auf der zueinander gerichteten Seite jeweils mit einem Zahnrad versehen sind und die gemeinsam ein Kegelradgetriebe bilden. Die Antriebswelle weist dabei auf der zur Hubscheibe gerichteten Seite eine Kegelwälzlagerung auf. Dieser Aufbau bewirkt nachteilig einen relativ großen axialen Abstand zwischen dem Kraftangriffspunkt der Kugelstangen in der Hubscheibe und dem Kegelrollenlager.

Der Erfindung liegt die Aufgabe zugrunde, eine gattungsgemäße Lagerung der Antriebswelle so zu gestalten, daß die Lebensdauer erhöht werden kann, bei gleichzeitig kompakter Bauweise sowie den erforderlichen Bauteileumfang zu minimieren zur Vermeidung einer nachteiligen Toleranzaddition.

Diese Aufgabe wird durch die im kennzeichnenden Teil des Anspruchs 1 angegebenen Merkmale gelöst. Die erfindungsgmäße Lagerung ist vorteilhaft zur Erreichung einer bauraumoptimierten Bauweise so ausgelegt, daß über den Innenring des Wälzlagers gleichzeitig der Antrieb der Zylindertrommel erfolgt. Dabei ermöglicht diese Gestaltung, daß der Innenring einstückig mit dem Antriebsteil verbunden ist. Diese Gestaltung bewirkt vorteilhaft eine Verringerung des axialen Abstandes zwischen dem Kraftangriffspunkt der Kugelstangen in der Hubscheibe und der Lagermitte, wodurch vorteilhaft eine höhere Lebensdauer der Lagerung erreichbar ist, da ein verringerter Axialabstand die Krafteinleitung in das Lager und damit die Standzeit verbessert , d. h. die Einsatzbereitschaft der Schrägachspumpe kann damit gesteigert werden.

In einer Ausgestaltung der Erfindung ist vorgesehen, daß am Innenring des Wälzlagers unmittelbar ein Zahnrad angefügt ist, daß mit einem entsprechenden an der Zylindertrommel befindlichen Gegenzahnrad das Kegelradgetriebe bildet. Die Gestaltung sieht dabei vor, daß die das Kegelradgetriebe bildenden Zahnräder im Bereich des Zahneingriffs gemeinsam die Hubscheibe radial und axial übergreifen.

Ein weiterer Erfindungsgedanke kombiniert den Wälzlagerinnenring mit der Hubscheibe, wobei die Antriebsverbindung von der Hubscheibe zur Zylindertrommel über Kugelstangen erfolgt.

In vorteilhafter Ausgestaltung der Erfindung ist der Innenring einstückig mit der Hubscheibe bzw. dem Zahnrad verbunden, oder es besteht eine lösbare Verbindung zwischen den beiden zusammengefügten Bauteilen. Eine Weiterentwicklung der Erfindung sieht z. B. eine Schrumpfverbindung vor, oder ein Vielkeilwellenprofil auf der Antriebswelle, das in eine entsprechende Gegenverzahnung, eingebracht im Innenring, eingefügt ist bzw. eine Passfeder-Nutverbindung zur Erreichung einer drehfesten Verbindung zwischen der Antriebswelle und dem Wälzlagerinnenring kombiniert mit einem weiteren Bauteil. Bedingt durch die einstückige Ausbildung des Innenrings mit der Hubscheibe bzw. dem Zahnrad ergibt sich weiter vorteilhaft die Möglichkeit eine groß dimensionierte Paßfeder, das heißt die eine große Länge aufweist, einzusetzen, da durch die einstückige Ausbildung nahezu die gesamte axiale Breite des Innenrings für die Paßfeder nutzbar ist. Die sich vorteilhaft verändernde Paßfederlänge bewirkt eine deutlich sich steigernde Drehmomentübertragung.

Der Aufbau der erfindungsgemäßen Lagerung sieht vor, daß als Wälzlager ein Kugellager Verwendung findet, welches als kombiniertes Axial- und Radiallager dient. Die Lagerung kann ebenfalls durch zwei voneinander getrennte Wälzlager erfolgen, z. B. durch ein Zylinderrollenlager, dessen Innenring als Mehrfunktionsteil ausgelegt ist, an das sich ein Axiallager anschließt, beispielsweise ebenfalls ein Zylinderrollenlager, wobei dieses an der Schulter des erfindungsgemäßen Innenrings anliegt. Als eine weitere Alternative bietet die erfindungsgemäße Lagerung auch die Verwendung eines Kegelrollenlagers an.

Die besondere Gestaltung des Innenrings des Wälzlagers unterstreichend ist dieser weiter so ausführbar, daß dieser sowohl für ein Radial- als auch für ein Axiallager als Innenring dient. Diese Gestaltung, bei der die Wälzlager rechtwinkelig zueinander angeordnet sind, ermöglicht eine vorteilhaft platzsparende einfach zu montierende Lagerung.

Eine weitere Ausgestaltung sieht als Wälzlager ein Schrägrollen- oder Schrägkugellager vor, das bei hohen Drehmomentübertragungen vorteilhaft eingesetzt werden kann.

Zur Erreichung einer Lagerung bzw. einer Antriebsverbindung zwischen der Zylindertrommel und der Antriebswelle, die einen vorzugsweise geringen radialen Bauraum beansprucht, sieht die Erfindung eine Wälzlagerung vor, deren Innenring auf einem abgesetzten Abschnitt der Antriebswelle drehfest angeordnet ist und mit den Zahnrad einstückig verbunden ist. Der Innenring ist in Richtung des nicht abgesetzten Wellenabschnittes mit einer Ausnehmung versehen, deren Schulter als Lauffläche für die Wälzkörper eines Axial-Zylinderrollenlagers dient. Diese Gestaltung ermöglicht vorteilhaft eine Axiallagerauslegung in Anlehnung an den Durchmesser der Antriebswelle.

Der Erfindungsgedanke ist weiter übertragbar auf eine Innenringkonzeption, bei der dieser sowohl mit dem Zahnrad als auch mit der Hubscheibe eine Einheit bildet, wodurch sich vorteilhaft der benötigte Einbauraum verringert. Weiter kann erfindungsgemäß die Antriebswelle noch mit einbezogen werden, wodurch diese einstückig mit dem Zahnrad, der Hubscheibe und dem Innenring verbunden ist. Diese drei oder vier Funktionen erfüllende Einheit bewirkt weiter eine Reduzierung von sich aufaddierenden Toleranzen, wodurch vorteilhaft die in Verbindung bzw. in Antriebsverbindung stehenden Bauteile genauer zusammengefügt werden können und die Lagerung exakter einstellbar ist.

Weitere Merkmale der Erfindung ergeben sich aus den Zeichnungen und den dazugehörigen Figurenbeschreibungen, in denen Ausführungsbeispiele der Erfindung dargestellt sind. Es zeigen:
- Figur 1: in einem Längsschnitt eine Axialkolbenpumpe in Schrägachsenbauart mit zwei unterschiedlichen Wälzlagerungen der Antriebswelle auf der zur Zylindertrommel gerichteten Seite;
- Figur 2: eine Schrägachsenpumpe, vergleichbar der in Figur 1 dargestellten Ausführung mit einer rechtwinkelig zueinander angeordneten Axial- und Radiallagerung;
- Figur 3: eine Schrägrollenwälzlagerung in einer Schrägachsenpumpe, vergleichbar der in Figur 1 dargestellten Ausführung,
- Figur 4: eine Wälzlagerung auf einer abgesetzten Antriebswelle für eine Schrägachsenpumpe.

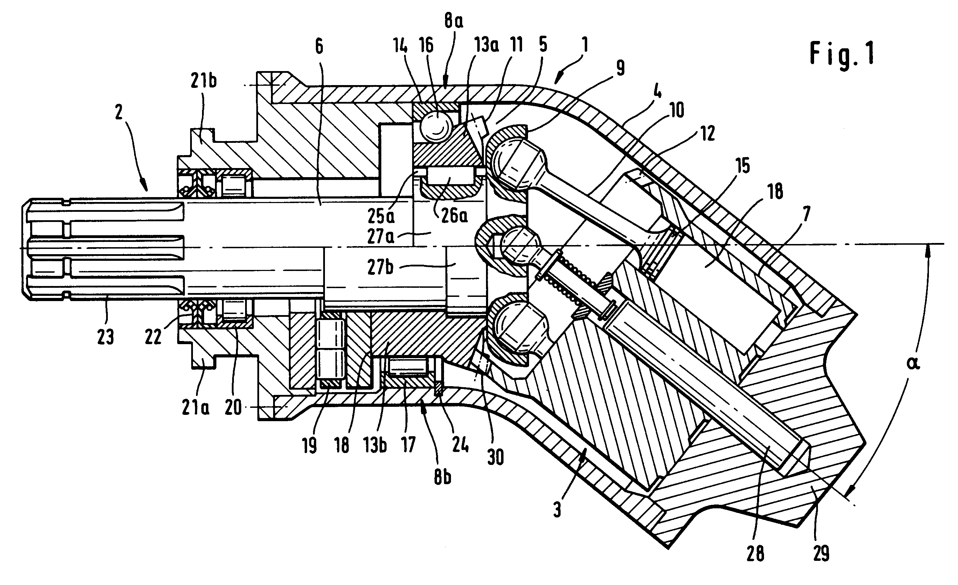

Die Figur 1 verdeutlicht den Aufbau der Schrägachspumpe 1, in der zwei Varianten der erfindungsgemäßen Lagerung verwirklicht sind. Der Aufbau der Schrägachspumpe 1 setzt sich im wesentlichen aus dem Antriebsteil 2 und dem Verdichterteil 3 zusammen, wobei diese Bauteile unter einem Winkel α, der ca. 40° beträgt, in dem einstückig ausgebildeten Gehäuse 4 drehbar eingebracht sind. Das Antriebsteil 2 setzt sich zusammen aus der Antriebswelle 6, welche stirnseitig aus dem Gehäuse 4 ragt und von einem endseitig in das Gehäuse 4 eingebrachten Verschlußteil 21a, 21b umgeben ist, in das zur endseitigen Lagerung das Radiallager 20 eingebracht ist, dem sich ein Wellendichtring 22 anschließt. Am freien Ende der Antriebswelle 6 ist zum Antrieb der Schrägachspumpe 1 ein Vielkeilprofil 23 angeordnet. An dem vom Vielkeilprofil 23 entgegengesetzten Ende der Antriebswelle 6 ist diese mit einer weiteren Lagerung versehen, wobei in Figur 1 zwei unterschiedliche Varianten dargestellt sind. Die obere in Figur 1 abgebildete Lagerung zeigt das Wälzlager 8a in Form eines Kugellagers, dessen Außenring 14 in das Gehäuse 4 eingepaßt ist und axial in Richtung des Vielkeilprofils 23 zeigend am Verschlußteil 21b anliegt. Der Innenring 13a des Wälzlagers 8a ist über eine Axialnut 25 und der Passfeder 26a drehfest mit dem Ansatz 27a der Antriebswelle 6 verbunden. Der Innenring 13a ist weiter auf der zum Verdichterteil 3 zeigenden Seite mit einer Verzahnung versehen zur Bildung des Zahnrades 11, das mit einem entsprechend gegengeformten Zahnrad 12 ein Kegelradgetriebe 5 bildet, wobei die Zahnräder 11, 12 auf der Innenseite des gekrümmt ausgebildeten Gehäuses 4 einen Zahneingriff 30 bilden. Der Wälzlagerung 8a, 8b nebengeordnet und am Ende der Antriebswelle 6 befindlich ist die einstückig mit der Antriebswelle 6 verbundene Hubscheibe 9 angeordnet, welche sich radial bis über den Ansatz 27a, 27b erstreckt und einstückig mit dem Ansatz 27a, 27b verbunden ist. Die Hubscheibe 9 ist mit einer Vielzahl gleichmäßig verteilter Kalotten versehen, in denen Kugelstangen 10 gelenkig gelagert sind. Die Kugelstangen 10 stellen eine Verbindung zwischen den jeweils in Zylindern 18 geführten Kolben 15 und der Hubscheibe 9 dar. Die gesamte Zylindertrommel 7 ist um den Lagerbolzen 28 drehbar angeordnet und stützt sich auf dem Endstück 29 ab.

Das untere in Figur 1 dargestellte Wälzlager 8a ist als Radialwälzlager 17 ausgebildet, dessen Außenring im Gehäuse 4 eingepaßt ist und durch den Sicherungsring 24 axial fixiert ist. Der Innenring 13b des Wälzlagers 8b ist drehfest auf der Antriebswelle 6 aufgeschrumpft und erstreckt sich axial von der Hubscheibe 9 beginnend die Breite des Ansatzes 27b und des Zylinderrollenlagers 17 überdeckend bis zu dem Axiallager 19, welches unmittelbar an der Schulter 18 des Innenrings 13b anliegt. Über das Verschlußteil 21a, eingesetzt in das Gehäuse 4, erfolgt eine Abstützung der ausgehend von der Zylindertrommel 7 verursachten Axialkraft.

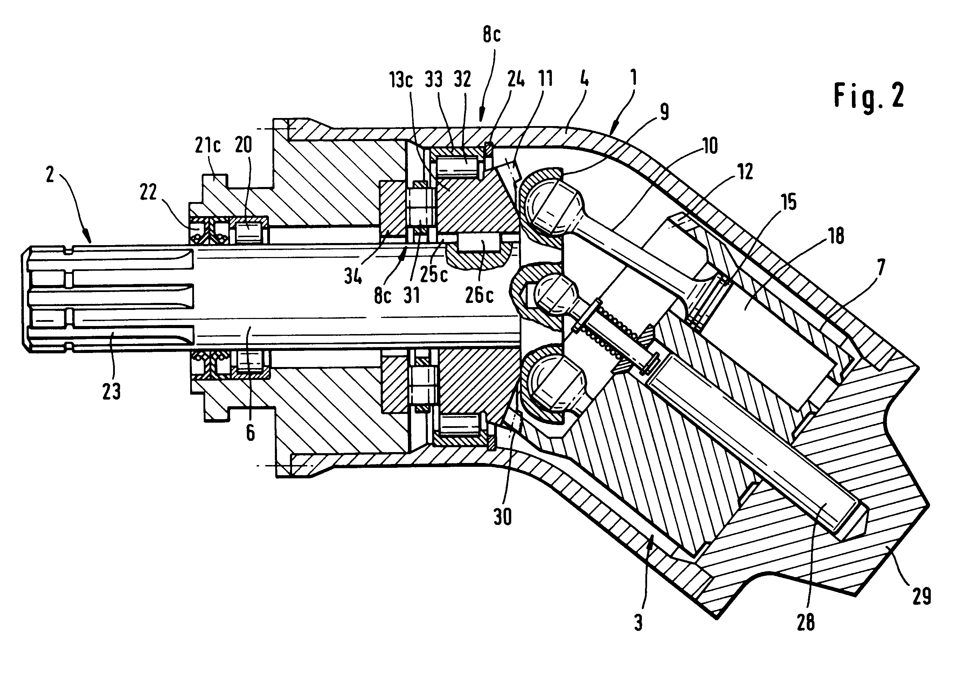

In den weiteren Ausführungsbeispielen (Figur 2, 3, 4) einer erfindungsgemäßen Wälzlagerung sind die mit dem ersten Ausführungsbeispiel übereinstimmenden Bauteile mit gleichen Bezugsziffern versehen, so daß bezüglich deren Beschreibung auf die Ausführung zum ersten Ausführungsbeispiel verwiesen werden kann.

In Figur 2 setzt sich die Wälzlagerung 8c zusammen aus dem Radiallager 32 und dem Axiallager 31, die rechtwinkelig zueinander angeordnet sind. Entsprechend weist der Innenring 13c rechtwinkelig zueinander angeordnete Laufbahnen auf, die für das Axiallager 31 stirnseitig auf der zum Verschlußteil 21c gerichteten Seite und für das Radiallager 32 auf dem äußeren Umfang des Innenrings 13c angeordnet sind. Der Außenring 33 des Radiallagers 32 ist im Gehäuse 4 eingepaßt und axial durch den Sicherungsring 24 fixiert. Über den Laufring 34, der axial in das Verschlußteil 21c eingebracht ist, stützt sich das Axiallager 31 ab. Der Aufbau der in Figur 2 gezeigten Schrägachspumpe 1 zeigt weiter eine drehfest an der Antriebswelle 6 befestigte Hubscheibe 9 sowie eine Passfeder 26c, die in die Antriebswelle 6 eingefügt ist und deren aus der Welle ragender Abschnitt in die im Innenring 13c eingebrachte Axialnut 25c geführt ist zur Erreichung einer drehstarren Verbindung. Einstückig am Innenring 13c ist zur Schaffung einer Antriebsverbindung für die Zylindertrommel 7 das Zahnrad 11 angefügt.

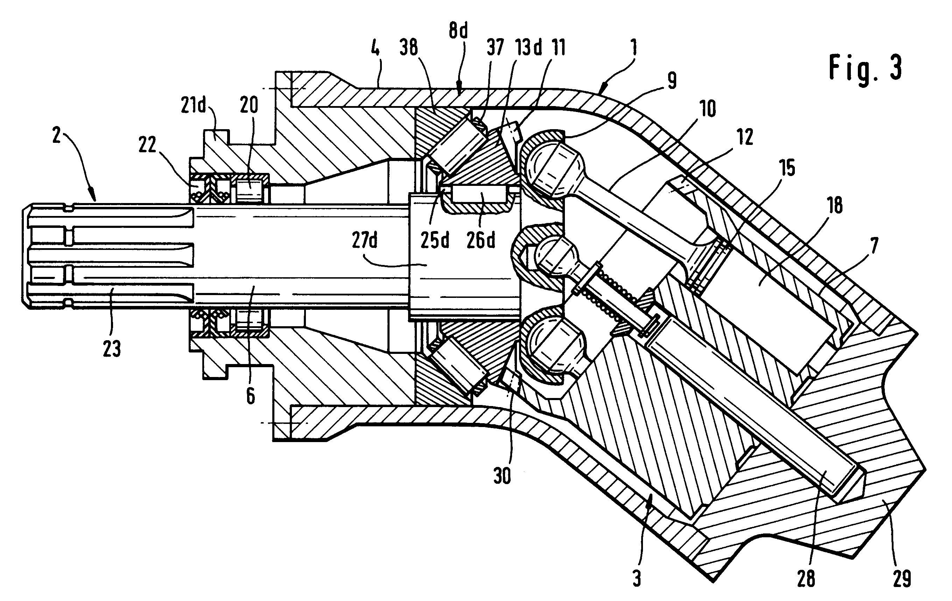

Die Verwendung eines Schrägrollenlagers 37 als Wälzlager 8d ist der Figur 3 zu entnehmen. Entsprechend der Schräglage der Wälzkörper ist der Innenring 13d ausgebildet, dessen Querschnittsprofil weitestgehend einer Dreiecksfläche entspricht und der jeweils seitlich der Wälzkörper mit einem Bord zur Führung der als Zylinderrollen ausgebildeten Wälzkörper versehen ist. An den Innenring 13d ist weiter in Richtung der Hubscheibe 9 zeigend eine Verzahnung zur Bildung eines Zahnrades 11 angeformt, das mit dem Gegenzahnrad 12 der Zylindertrommel 7 über den Zahneingriff 30 verbunden ist. Das Schrägrollenlager 37 weist einen Außenring 38 auf, der eingefügt im Gehäuse 4 sich über die Stirnfläche des Verschlußteils 21d abstützt. Der Innenring 13d besitzt auf der radialen Innenseite eine Axialnut 25d, in der die Passfeder 26d, eingesetzt im Ansatz 27d, geführt ist zur drehfesten Verbindung des Innenrings 13d mit der Antriebswelle 6.

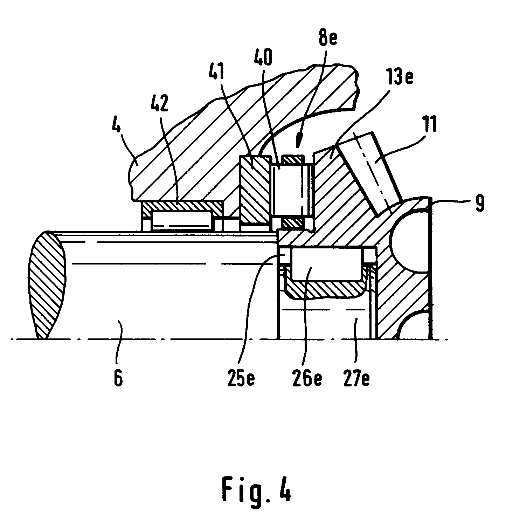

Aus der Figur 4 geht im wesentlichen in einer vergrößerten Darstellung die Wälzlagerung 8e hervor, die ein Axiallager 40 in Form eines Zylinderrollenlagers zeigt. Zur Erreichung eines geringen radialen Einbauraums der Lagerung ist der Innenring 13e auf einem ausgehend vom Wellendurchmesser der Antriebswelle 6 abgestuften Ansatz 27e befestigt, so daß ein ausgehend vom Durchmesser der Antriebswelle 6 dimensioniertes Axiallager 40 einsetzbar ist. Die Wälzkörper des Axiallagers 40 stützen sich zum einen an der vertikal angebrachten Schulter des Innenrings 13e ab und zum anderen an den Laufring 41, der in einer axialen Ausnehmung des Gehäuses 4 eingebracht ist. Zur Erreichung einer drehstarren Verbindung zwischen dem Innenring 13e und der Antriebswelle 6 dient die Passfeder 26e, welche in den Ansatz 27e eingesetzt ist und in die Axialnut 25e des Innenrings 13e ragt. Zur Erreichung einer bauraumoptimierten Gestaltung bildet der innenring 13e, die Hubscheibe 9 sowie das Zahnrad 11 eine Einheit, die einstückig miteinander verbunden sind. Aus Abbildung 4 ist weiter ein im axialen Abstand zum Axiallager 40 zwischen der Antriebswelle 6 und dem Gehäuse 4 befindliches Radiallager 42 entnehmbar.

### Bezugszahlenliste

- 1: Schrägachspumpe
- 2: Antriebsteil
- 3: Verdichterteil
- 4: Gehäuse
- 5: Kegelwandgetriebe
- 6: Antriebswelle
- 7: Zylindertrommel
- 8: Wälzlager
- 9: Hubscheibe
- 10: Kegelstangen
- 11: Zahnrad (Antr. Welle)
- 12: Zahnrad (Verd. Teil)
- 13: Innenring (Wälzlager)
- 14: Außenring
- 15: Kolben
- 16: Kugellager
- 17: Zylinderrollenlager
- 18: Schulter
- 19: Axiallager
- 20: Radiallager
- 21: Verschlußteil
- 22: Wellendichtring
- 23: Vielkeilprofil
- 24: Sicherungsring
- 25: Axialnut
- 26: Paßfeder
- 27: Ansatz
- 28: Lagerbolzen
- 29: Endstück
- 30: Zahneingriff
- 31: Axiallager (Figur 2)
- 32: Radiallager (Figur 2)
- 33: Außenring (Figur 2)
- 34: Laufring (Figur 2)
- 37: Schrägrollenlager (Figur 3)
- 38: Außenring (Figur 3)
- 40: Axiallager (Figur 4)
- 41: Laufring (Figur 4)
- 42: Radiallager (Figur 4)

## Patentansprüche

1. Lagerung für zwei zueinander abgewinkelte Bauteile innerhalb eines Gehäuses (4), die insbesondere in einem Axialkolbenmotor oder einer Axialkolbenpumpe in Schrägachsenbauart zur Anwendung kommt, und die ein Antriebsteil (2) mit einer mittenachsig verlaufenden, wälzgelagerten endseitig mit einer Hubscheibe (9) versehenen Antriebswelle (6) und eine in einem Verdichterteil (3) mittenachsig gelagerte Zylindertrommel (7) umfaßt, wobei eine Antriebsverbindung zwischen der Antriebswelle (6) und der Zylindertrommel (7) in Form eines Kegelradgetriebes (5) oder über mehrere die Zylindertrommel (7) mit der Hubscheibe (9) verbindenden Kugelstangen (10) erfolgt, **dadurch gekennzeichnet**, daß die Antriebswelle (6) auf der zur Hubscheibe (9) gerichteten Seite eine Lagerung aufweist, bei der ein zum Antrieb der Zylindertrommel (7) eingesetztes Bauteil mit einem Innenring (13) des Wälzlagers (8a bis 8e) verbunden ist.

2. Lagerung nach Anspruch 1, **dadurch gekennzeichnet**, daß unmittelbar am Innenring (13) ein Zahnrad (11) angefügt ist.

3. Lagerung nach Anspruch 1, **dadurch gekennzeichnet**, daß die Hubscheibe (9) mit dem Innenring (13) eine Einheit bildet.

4. Lagerung nach Anspruch 2 oder 3, **dadurch gekennzeichnet**, daß die Hubscheibe (9) bzw. das Zahnrad (11) einstückig oder lösbar mit dem Innenring (13) verbunden ist.

5. Lagerung nach einem der Ansprüche 1 bis 4, **dadurch gekennzeichnet**, daß als Wälzlager (8) ein Schrägkugellager (16) eingesetzt ist.

6. Lagerung nach einem der Ansprüche 1 bis 4, **dadurch gekennzeichnet**, daß als Wälzlager (8) ein Radialkräfte aufnehmendes Zylinderrollenlager (17) Anwendung findet, dem ein weiteres Axialkräfte aufnehmendes Zylinderrollenlager (19) zugeordnet ist.

7. Lagerung nach einem der vorhergehenden Ansprüche, **dadurch gekennzeichnet**, daß die Lagerung der Antriebswelle (6) ein Axiallager (31) und ein Radiallager (32) umfaßt, die mit einem Innenring (13c) in Verbindung stehen.

8. Lagerung nach einem der vorhergehenden Ansprüche, **dadurch gekennzeichnet**, daß als Wälzlager (8d) ein Schrägrollenlager (37) oder Schrägkugellager eingesetzt ist.

9. Lagerung nach einem der vorhergehenden Ansprüche, **dadurch gekennzeichnet**, daß der Innenring (13e) des als Axiallager (40) ausgebildeten Wälzlagers (8e) drehfest auf einem abgesetzten Ansatz (27e) der Antriebswelle (6) befestigt ist.

10. Lagerung nach einem der vorhergehenden Ansprüche, **dadurch gekennzeichnet**, daß der Innenring (13e) mit dem Zahnrad (11) sowie mit der Hubscheibe (9) eine Einheit bildet.

11. Lagerung nach Anspruch 10, **dadurch gekennzeichnet**, daß die Antriebswelle (6) einstückig mit dem Innenring (13e), dem Zahnrad (11) und der Hubscheibe (9) verbunden ist.

## Claims

1. Mounting for two mutually inclined components in a housing (4), particularly for structures with mutually inclined axes in axial piston engines or axial piston pumps, said components being a driving element (2) having a coaxially extending driving shaft (6) mounted on rolling bearings and provided at one end with a lifting disk (9), and a cylinder drum (7) mounted coaxially in a compressor element (3), a driving connection between the driving shaft (6) and the cylinder drum (7) being effected by a bevel gear (5) or by several ball-headed rods (10) which connect the cylinder drum (7) to the lifting disk (9), characterized in that the end of the driving shaft (6) oriented towards the lifting disk (9) comprises a mounting arrangement in which a part used for driving the cylinder drum (7) is connected to an inner ring (13) of the rolling bearing (8a to 8e).

2. Mounting according to claim 1, characterized in that a gear wheel (11) is attached directly to the inner ring (13).

3. Mounting according to claim 1, characterized in that the lifting disk (9) and the inner ring (13) together form a unitary structure.

4. Mounting according to claim 2 or 3, characterized in that the lifting disk (9), or the gear wheel (11), is made in one piece with the inner ring (13), or detachabaly connected to the inner ring (13).

5. Mounting according to one of the claims 1 to 4, characterized in that the rolling bearing (8) is an angular contact ball bearing (16).

6. Mounting according to one of the claims 1 to 4, characterized in that the rolling bearing (8) is a cylindrical roller bearing (17) which absorbs radial forces, and a further cylindrical roller bearing (19) absorbing axial forces is associated therewith.

7. Mounting according to one of the preceding claims, characterized in that the mounting of the driving shaft (6) comprises an axial bearing (31) and a radial bearing (32), and both these bearings are associated with the inner ring (13).

8. Mounting according to one of the preceding claims, characterized in that the rolling bearing (8d) is an angular roller bearing (37) or an angular contact ball bearing.

9. Mounting according to one of the preceding claims, characterized in that the inner ring (13e) of the rolling bearing (8e), made in the form of an axial bearing (40), is fixed rotationally fast on a stepped extension (27e) of the driving shaft (6).

10. Mounting according to one of the preceding claims, characterized in that the inner ring (13e), the gear wheel (11) and the lifting disk (9) together form a unitary structure.

11. Mounting according to claim 10, characterized in that the driving shaft (6) is made in one piece with the inner ring (13e), the gear wheel (11) and the lifting disk (9).

## Revendications

1. Montage de deux composants inclinés, l'un par rapport à l'autre, dans un boitier (4), et plus particulièrement, montage d''une construction à axes inclinés dans un moteur à pistons axiaux ou dans une pompe à pistons axiaux, lesdits composants étant un élément moteur (2) ayant un arbre menant (6) coaxial monté sur un palier à roulement et dont une extrémité est munie d'un disque de levage (9), et un tambour cylindrique (7) monté coaxialement dans un élément de compresseur (3), une liaison d'entraînement entre l'arbre menant (6) et le tambour cylindrique (7) étant effectuée à l'aide d'un engrenage à roues coniques (5) ou à l'aide de tiges à rotule (10) qui relient le tambour cylindrique (7) au disque de levage (9), caractérisé en ce qu'à son extrémité orientée vers le disque de levage (9), l'arbre menant (6) comprend un montage dans lequel une partie servant à entraîner le tambour cylindrique (7) est reliée à une bague interne (13) du palier à roulement (8a à 8e).

2. Montage selon la revendication 1, caractérisé en ce qu'une roue dentée (11) est rapportée directement sur la bague interne (13).

3. Montage selon la revendication 1, caractérisé en ce que le disque de levage (9) forme avec la bague interne (13), un ensemble unitaire.

4. Montage selon la revendication 2 ou 3, caractérisé en ce que le disque de levage (9), ou la roue dentée (11), est réalisé en une seule pièce avec la bague interne (13) ou relié à celle-ci de manière détachable.

5. Montage selon l'une des revendications 1 à 4, caractérisé en ce que le palier à roulement (8) est un roulement à billes à contact oblique (16).

6. Montage selon l'une des revendications 1 à 4, caractérisé en ce que le palier à roulement (8) est un roulement à rouleaux cylindriques (17) qui absorbe des forces radiales et auquel est associé un autre roulement à rouleaux cylindriques (19) qui absorbe des forces axiales.

7. Montage selon l'une des revendications précédentes, caractérisé en ce que le montage de l'arbre menant (6) se fait à l'aide d'un roulement axial (31) et d'un roulement radial (32), lesdits roulements axial et radial étant associés à la bague interne (13c).

8. Montage selon l'une des revendications précédentes, caractérisé en ce que le palier à roulement (8d) est un roulement à rouleaux obliques (37) ou un roulement à billes à contact oblique.

9. Montage selon l'une des revendications précédentes, caractérisé en ce que la bague interne (13e) du palier à roulement (8e) configuré sous la forme d'un roulement axial (40) est fixée en étant immobilisée en rotation sur un embout étagé (27e) de l'arbre menant (6).

10. Montage selon l'une des revendications précédentes, caractérisé en ce que la bague interne (13e) forme avec la roue dentée (11) et le disque de levage (9), un ensemble unitaire.

11. Montage selon la revendication 10, caractérisé en ce que l'arbre menant (6) est réalisé en une seule pièce avec la bague interne (13e), la roue dentée (11) et le disque de levage (9).
